# EUROPÄISCHE PATENTANMELDUNG

(11) **EP 2 863 176 A2**
(43) Veröffentlichungstag der Anmeldung: **22.04.2015**
(21) Anmeldenummer: 14187966.8
(22) Anmeldetag: 07.10.2014
(51) Int. Cl.: G01C 15/00

(54) **Sensor mit um Drehachse beweglicher Abtasteinheit**

(30) Priorität: 21.10.2013 DE 102013111547
(71) Anmelder: SICK AG, 79183 Waldkirch (DE)
(72) Erfinder: Gehring, Roland, 79215 Elzach-Prechtal (DE); Hug, Gottfried, 79183 Waldkirch (DE); Lipschinski, Dennis, 79348 Freiamt (DE)
(74) Vertreter: Hehl, Ulrich

(57) **Zusammenfassung**

Es wird ein Sensor (10) zur Erfassung von Objektinformationen aus einem Überwachungsbereich (20) angegeben, der eine Erfassungseinheit (18a-c) mit einem Empfänger (32, 34) zum Erzeugen eines elektrischen Empfangssignals aus elektromagnetischen Signalen von Objekten in dem Überwachungsbereich (20), eine um eine Drehachse (14) bewegliche Abtasteinheit (16), in der die Erfassungseinheit (18) zur periodischen Abtastung des Überwachungsbereichs (20) untergebracht ist sowie eine Auswertungseinheit (40, 42, 42) zur Erzeugung von Objektinformationen aus dem Empfangssignal aufweist. Dabei sind in der Abtasteinheit (16) mindestens zwei Erfassungseinheiten (18a-c) mit jeweiligem Empfänger (32, 34, 54) vorgesehen, um zusätzliche Objektinformationen zu gewinnen.

## Beschreibung

Die Erfindung betrifft einen Sensor zur Erfassung von Objektinformationen mit einer um eine Drehachse beweglichen Abtasteinheit sowie ein entsprechendes Verfahren nach dem Oberbegriff von Anspruch 1 beziehungsweise 15.

Im Bereich der optoelektronischen Sensoren ist die periodische Abtastung eines Überwachungsbereichs von den Laserscannern bekannt. Darin überstreicht ein von einem Laser erzeugter Lichtstrahl mit Hilfe einer Ablenkeinheit, etwa einem drehenden Umlenkspiegel oder einem rotierenden Spiegelrad, periodisch einen Überwachungsbereich. Das Licht wird an Objekten in dem Überwachungsbereich remittiert und nach Empfang in dem Scanner ausgewertet. Objektpositionen oder Objektkonturen werden in zweidimensionalen Polarkoordinaten aus der Winkelstellung der Ablenkeinheit und der Lichtlaufzeit von Laserscanner zu Objekt bestimmt. Die dritte Raumkoordinate kann durch entsprechende Bewegung der Ablenkeinheit in Querrichtung ebenfalls erfasst werden.

Laserscanner werden für Messanwendungen, aber auch wie in der DE 43 40 756 A1 in der Sicherheitstechnik zur Überwachung einer Gefahrenquelle eingesetzt. Dabei wird ein Schutzfeld überwacht, das während des Betriebs der Maschine vom Bedienpersonal nicht betreten werden darf. Erkennt der Laserscanner einen unzulässigen Eingriff in ein Schutzfeld, etwa ein Bein einer Bedienperson, so löst er eine entsprechende Absicherung aus, beispielsweise einen Nothalt. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Es ist auch bekannt, den Drehspiegel eines Laserscanners dadurch zu ersetzen, dass der gesamte Messkopf mit Lichtsender und Lichtempfänger rotiert. Ein solcher Scanner wird in der DE 197 57 849 B4 offenbart. In der EP 2 388 619 A1 ist ebenfalls eine drehbare Sende-/Empfangseinheit vorgesehen. Sie wird beispielsweise nach dem Transformationsprinzip von den drehfesten Bereichen des Sensors mit Energie versorgt, während die Datenübertragung drahtlos per Funk oder auf optischem Wege erfolgt.

Bekannt sind weiterhin bewegte oder drehende Kamerasysteme, die zur Erfassung eines größeren Bildbereichs Bilder aus verschiedenen Positionen aufnehmen. Ein solches System ist aber relativ aufwändig und baugroß. Außerdem werden Einzelbilder aufgenommen und ein zusammenhängendes Panoramabild allenfalls nachträglich und extern anhand der Bildinformationen erzeugt. Das ist aber je nach Szenerie nicht besonders genau. Alternativ wird nicht die Kamera bewegt, sondern ein externer Spiegel, über den die Kamera die Szenerie beobachtet. Durch die Spiegelbewegung entstehen dann aber Bildrotationen und Verzerrungen, die nur aufwändig korrigierbar sind. Entsprechend komplex ist die zeitliche und örtliche Abstimmung von Spiegelbewegung und Bildaufnahme.

Ein weiteres beispielhaftes Sensorprinzip, mit dem Objektinformationen erfasst werden können, basiert nicht auf Licht, sondern auf Funk. Ein solches Ortungsprinzip ist Radar, bei dem Radarwellen ausgesandt werden und aus den wieder empfangenen Radarwellen auf Objektpositionen und Objektentfernung geschlossen wird. In einem RFID-System (Radio Frequency Identification) ist die elektromagnetische Welle der Träger, dem gezielt und nicht allein durch Reflexion eine Objektinformation aufgeprägt wird. Ein RFID-Lesesystem erfasst das Signal von RFID-Transpondern oder RFID-Tags und liest oder modifiziert dadurch die darin gespeicherte Information. RFID-Transponder können prinzipiell aktiv sein, also eine eigene Energieversorgung aufweisen, oder passiv ausgeführt sein und ihre Energie aus der Sendeenergie des Lesesystems beziehen. Die häufig eingesetzten RFID-Transponder nach dem Backscatter-Prinzip reflektieren das Sendesignal des Lesegerätes und verändern es dabei durch Modulation in der Amplitude. In dem etablierten Ultrahochfrequenzstandard (UHF) ISO 18000-6 werden passive Transponder nach dem Backscatter-Verfahren ausgelesen.

Möchte man mehr Informationen über die Objekte in dem Überwachungsbereich erfassen, als dies ein einzelner Sensor leistet, so können Sensordaten fusioniert werden. Das erfordert aber den Aufwand für mehrere Sensoren und deren Koordination. Gerade die Kalibration zueinander (Registrierung) muss sehr genau und stabil sein, weil die Zusatzinformationen andernfalls nicht zuverlässig einbezogen werden und dann wegen mangelnder Genauigkeit die gewonnenen Informationen nicht ausgenutzt werden.

Es ist daher Aufgabe der Erfindung, die Informationserfassung mit einem gattungsgemäßen Sensor zu verbessern.

Diese Aufgabe wird durch einen Sensor zur Erfassung von Objektinformationen mit einer um eine Drehachse beweglichen Abtasteinheit sowie ein entsprechendes Verfahren nach Anspruch 1 beziehungsweise 15 gelöst. Dabei geht die Erfindung von dem Grundgedanken aus, eine Abtasteinheit um eine Drehachse zu bewegen, um einen größeren Überwachungsbereich erfassen zu können. Um zusätzliche Informationen zu gewinnen, sind in dieser Abtasteinheit mehrere mitbewegte Erfassungseinheiten vorgesehen, die jeweils elektromagnetische Signale von den Objekten in dem Überwachungsbereich empfangen und auswerten, also beispielsweise Licht im sichtbaren, ultravioletten oder infraroten Spektrum oder über eine Antenne erfasste Signale wie etwa ein RFID-Signal. Der Grundaufbau des Sensors ähnelt also einem Scanner mit drehendem Messkopf, jedoch ist das Sensorprinzip der Erfassungseinheiten nicht auf eine Lichtlaufzeitmessung mit einem ausgesandten und wieder empfangenen Lichtstrahl beschränkt, so dass mehr physikalische Größen erfassbar sind, die zusätzliche Objektinformationen erschließen. Zudem haben die mehreren Erfassungseinheiten vorzugsweise unterschiedliche Sichtfelder. Dabei sind sowohl aktive als auch passive Erfassungseinheiten denkbar, d.h. die elektromagnetischen Signale können im aktiven Fall Reflexionen oder Remissionen eines Sendesignals der Erfassungseinheit, aber auch im passiven Fall von dem Objekt ausgehende Signale sein, wie beispielsweise dort remittiertes Umgebungslicht oder das Signal eines aktiv sendenden RFID-Transponders.

Die Erfindung hat den Vorteil, dass ein einfaches, kompaktes Sensorsystem für die gleichzeitige Erfassung vielfältiger Sensordaten aus der Umgebung geschaffen ist. Das Prinzip eines Scanners mit drehendem Messkopf wird als Plattform genutzt, um unterschiedliche Sensortypen zu einander ergänzenden Scannern zu kombinieren. Die mehreren Erfassungseinheiten ermöglichen eine einfache Fusion von Sensordaten auch unterschiedlicher Messprinzipien. Da die verschiedenen Objektinformationen mit demselben Sensor erfasst werden, wird die Synchronisation und Datenfusion erheblich erleichtert und verbessert. Etwaige Abbildungsfehler, etwa eine gegenseitige Rotation oder Translation, können durch die kompakte Bauform innerhalb eines Geräts einfach korrigiert werden.

Die Erfassungseinheiten weisen bevorzugt bezüglich der Bewegung um die Drehachse einen gegenseitigen Winkelversatz auf. Das kann sich gleichermaßen auf die physische Anordnung innerhalb der Abtasteinheit, welche so den verfügbaren Bauraum optimal ausnutzt, wie auf die Erfassungsrichtung beziehen. Die bevorzugte Sichtrichtung der Erfassungseinheiten ist radial von der Drehachse nach außen. Jede Erfassungseinheit ist damit in einer bestimmten Drehstellung für einen eigenen Winkelsektor zuständig. Bei optischen Erfassungseinheiten steht dabei die optische Achse der Erfassungseinheit senkrecht zu der Drehachse und liegt innerhalb eines Überwachungsbereichs, der eine Abtastebene senkrecht zu der Drehachse umfasst. Eine besonders bevorzugte Bauform umfasst zwei mit 180° Winkelversatz zueinander gegenüberliegende Erfassungseinheiten mit entgegengesetzter Sichtrichtung. Alternativ zu einem Winkelversatz ist auch denkbar, dass Erfassungseinheiten längs der Drehachse übereinander angeordnet werden. Das erfordert mehr Bauhöhe, ermöglicht aber eine Informationserfassung ohne gegenseitigen Zeitversatz etwa bei schnell bewegten Objekten.

Die Erfassungseinheiten sind bevorzugt zueinander registriert, und die Auswertungseinheit ist dafür ausgebildet, die Objektinformationen der Erfassungseinheiten zu fusionieren. Diese Registrierung oder Kalibrierung, also letztlich die Bestimmung einer Umrechnungsvorschrift für die erfassten Daten in ein gemeinsames Koordinatensystem, erfolgt vorzugsweise anders als bei der herkömmlichen Fusion mehrerer Sensoren schon im Herstellungsprozess. Eine aufwändige externe Registrierung bei der Installation oder gar während des Betriebs kann entfallen. Da die Erfassungseinheiten Teil desselben Sensors sind, ist die Registrierung besonders genau und stabil. Die Daten sind zeitlich und örtlich besonders gut fusionierbar und vergleichbar.

Bevorzugt weist mindestens eine Erfassungseinheit einen Bildsensor auf. Damit werden Bilder in verschiedenen Richtungen je nach Drehstellung der Abtasteinheit aufgenommen und so ein großer Teil der Umgebung des Sensors erfasst. Der Bildsensor kann auch ein Wärmebildsensor sein. Mit einem solchen Sensor (beispielsweise FLIR, Forward Lookoing InfraRed) werden zusätzliche Informationen über das sichtbare Spektrum hinaus erfasst.

Die Auswertungseinheit ist dafür bevorzugt ausgebildet, mit dem Bildsensor in verschiedenen Drehstellungen der Abtasteinheit aufgenommene Bilddaten zu einem Panoramabild zusammenzusetzen. Dieses Panoramabild umfasst einen Teilausschnitt oder die gesamte 360°-Umgebung. Für das Zusammensetzen können einerseits die bekannten Drehstellungen ausgenutzt werden, unter denen die jeweiligen Bilder aufgenommen sind. Andererseits können Bildmerkmale erkannt und die Nahtstellen daran ausgerichtet werden ("Stitching"). Kombiniert man diese beiden Verfahren, so entsteht ein viel genaueres Panoramabild, beispielsweise indem zunächst ein rohes Panoramabild aufgrund der bekannten Drehstellungen zusammengesetzt wird und darin anschließend die Nahtstellen anhand von Bildmerkmalen korrigiert werden.

Mindestens eine Erfassungseinheit weist zur optischen Entfernungsmessung einen Lichtsender zum Aussenden eines Sendelichtstrahls und einen Lichtempfänger zum Empfangen des von Objekten in dem Überwachungsbereich remittierten Sendelichtstrahls auf, wobei die Auswertungseinheit dafür ausgebildet ist, eine Lichtlaufzeit des ausgesandten und wieder empfangenen Lichts zu bestimmen. Solche Lichtlaufzeitverfahren werden in herkömmlichen Laserscannern eingesetzt, allerdings üblicherweise nicht in einer mitdrehenden Abtasteinheit, sondern mit einem Drehspiegel, und vor allem bilden sie dort die einzige Erfassungseinheit. Zu den Lichtlaufzeitverfahren zählen Pulsverfahren, die den Empfangszeitpunkt eines reflektierten Laserpulses bestimmen, oder Phasenverfahren, die ein amplitudenmoduliertes Lichtsignal aussenden und den Phasenversatz zu dem empfangenen Lichtsignal bestimmen.

Die Erfassungseinheit zur optischen Entfernungsmessung weist bevorzugt eine Vielzahl von Lichtempfängern auf. Liegen beispielsweise mehrere Lichtempfänger bezüglich der Drehachse zeilenartig übereinander, so werden effektiv mehrere Abtastebenen gebildet. Den Lichtempfängern sind je nach Ausführungsform ein oder mehrere Lichtsender einzeln, gruppenweise oder gemeinsam zugeordnet. Die Lichtempfänger müssen auch nicht separat ausgebildet, sondern können auf einem gemeinsamen Chip als Empfängerzeile oder Empfängermatrix integriert sein. Das ergibt dann einen 3D-Bildsensor mit zeilen- oder matrixförmigem Empfangsbereich, dessen einzelne Pixel im Gegensatz zu einem herkömmlichen Bildsensor keine Grau- oder Farbwerte liefern, sondern Entfernungen. Ein bekanntes Verfahren für einen 3D-Bildsensor mit Lichtlaufzeitmessung in den einzelnen Pixeln ist die Photonmischdetektion (PMD).

Mindestens eine Erfassungseinheit weist bevorzugt einen RFID-Empfänger oder einen Radar-Empfänger auf. Während bisher optische Erfassungseinheiten beschrieben wurden, ist der Sensor darauf nicht beschränkt. RFID-Empfänger und Radar-Empfänger sind Beispiele für physikalisch gänzlich andere Sensorprinzipien, die ebenfalls im selben kompakten Sensor untergebracht werden können. Während ein RFID-Empfänger für das Auslesen entsprechender RFID-Transponder ausgebildet ist, erkennt ein Radar-Empfänger auf einem physikalisch diversitären Weg Objektkonturen und Objektpositionen. Der Radar-Empfänger wird vorzugsweise mit einem Radar-Sender kombiniert oder als Radar-Transceiver ausgebildet, um sein eigenes aktives Signal nach Reflexion im Überwachungsbereich auszuwerten. Auch viele der eingangs kurz erläuterten RFID-Verfahren basieren auf Rückstreuung eines Sendesignals, so dass der RFID-Empfänger ebenfalls vorzugsweise als Transceiver ausgebildet ist.

Mindestens zwei Erfassungseinheiten sind bevorzugt untereinander gleichartig aufgebaut. Dabei bedeutet gleichartig zunächst das gleiche Sensorprinzip, also beispielsweise Bildaufnahme, optische Entfernungsmessung, Radar oder RFID-Lesen, insbesondere aber auch insgesamt baugleiche Erfassungseinheiten. Dadurch entsteht ein redundantes oder zweikanaliges System, das ausfallsicher ist und den gegenseitigen Vergleich von Messdaten erlaubt. Das ist eine Möglichkeit, die strengen Anforderungen eines in der Sicherheitstechnik eingesetzten Sensors zu erfüllen.

Bevorzugt weisen mehrere Erfassungseinheiten einen RFID-Empfänger oder einen Radar-Empfänger auf. Das kann genutzt werden, um wie im vorigen Absatz ein redundantes System zu schaffen. Das Signal einer zusätzlichen Erfassungseinheit mit RFID-Empfänger oder Radar-Empfänger kann aber auch zum Ausblenden eines Hintergrunds oder zur Transponderlokalisierung verwendet werden.

Mindestens so interessant wie redundante Erfassungseinheiten sind echt diversitäre, also auf verschiedenen Sensorprinzipien basierende Erfassungseinheiten. Dazu können sämtliche hier beschriebenen Erfassungseinheiten in allen Ausprägungen miteinander kombiniert werden.

In einer derartigen vorteilhaften Ausführungsform weist mindestens eine Erfassungseinheit einen Bildsensor auf und mindestens eine Erfassungseinheit ist zur optischen Entfernungsmessung ausgebildet. Ein solcher Sensor gewinnt durch die Lichtlaufzeitmessung ein Abstandsprofil, also dreidimensionale Geometriedaten, und zugleich Bildinformationen. In deren Überlagerung entsteht beispielsweise ein Panoramabild mit Abstandsinformationen in einem Datensatz, oder ein geometrisches Gerüst aus der Lichtlaufzeitmessung mit realen Bilddaten ("Textur") der Bildsensoren. Denkbare Anwendungen sind Visualisierungen etwa von Straßenzügen und die Navigation sowohl als Assistenzsystem wie zur autonomen Fahrzeugsteuerung.

Die Geometriedaten der optischen Entfernungsmessung können auch vorteilhaft eingesetzt werden, um Kameraparameter einzustellen. In einer vorteilhaften Ausführungsform wird eine Fokuseinstellung für eine Empfangsoptik des Bildsensors anhand der optischen Entfernungsmessung eingestellt und/oder die Bildauflösung der mit dem Bildsensor aufgenommenen Bilddaten anhand der optischen Entfernungsmessung digital angepasst. Dadurch entstehen rundum scharfe Bilder beziehungsweise eine auf das Objekt bezogen gleichmäßige Bildauflösung unabhängig von dessen Abstand und Orientierung. Das ist sehr hilfreich für nachgelagerte Bildauswertungen wie Codelesen oder automatische Zeichenerkennung (OCR, Optical Character Recognition). Denkbar ist auch, die Beleuchtung nachzuführen, so dass abstandsbedingte Helligkeitsunterschiede ausgeglichen werden.

Bevorzugt weist der Sensor mindestens eine Erfassungseinheit mit einem RFID-Empfänger oder einem Radar-Empfänger und mindestens eine Erfassungseinheit mit einem Bildsensor oder zur optischen Entfernungsmessung auf. Eine Kombination aus optischer Erkennung und Funk, also insbesondere einer optischen Entfernungsmessung mit Radar, ist besonders robust und somit gerade für Anwendungen im Outdoorbereich geeignet. Kombinationen mit RFID-Empfängern ermöglichen, optisch ermittelten Daten eine RFID-Information hinzuzufügen oder beispielsweise einen gelesenen RFID-Datensatz zu einem bestimmten optisch identifizierten Objekt vorzunehmen.

Der Sensor weist bevorzugt einen Winkelencoder auf, um eine Drehstellung der Abtasteinheit zu bestimmen, wobei eine Erfassung von elektromagnetischen Signalen in für die jeweilige Erfassungseinheit vorgegebenen oder anhand des Winkelencoders überprüften Drehstellungen erfolgt. Dadurch wird sichergestellt, dass die erfassten Informationen einzelner Erfassungseinheiten wie der Erfassungseinheiten in ihrer Gesamtheit dem richtigen Winkelbereich zugeordnet werden. Es ist denkbar, dass die Erfassungseinheiten ihre Signale jeweils synchron und mit gleicher Winkelauflösung erfassen, jedoch ebenso auch Abweichungen mit untereinander versetzten oder ungleichen Winkelauflösungen.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Schnittansicht eines Sensors mit zwei in einer Abtasteinheit rotierenden Erfassungseinheiten;
- Fig. 2: eine vereinfachte Schnittdarstellung eines Sensors in Funktionsblöcken mit einer Erfassungseinheit mit Bildsensor und einer darüber angeordneten Erfassungseinheit zur optischen Entfernungsmessung;
- Fig. 3: eine vereinfachte Schnittdarstellung eines Sensors in Funktionsblöcken mit einer Erfassungseinheit zur optischen Entfernungsmessung und einer Erfassungseinheit mit RIFD- oder Radar-System;
- Fig. 4: eine vereinfachte Schnittdarstellung eines Sensors in Funktionsblöcken mit zwei Erfassungseinheiten zur optischen Entfernungsmessung;
- Fig. 5: eine vereinfachte Schnittdarstellung eines Sensors in Funktionsblöcken mit zwei Erfassungseinheiten mit RFID- oder Radar-System;
- Fig. 6: eine vereinfachte Schnittdarstellung eines Sensors in Funktionsblöcken mit mehreren gegeneinander verkippten Erfassungseinheiten zur optischen Entfernungsmessung; und
- Fig. 7: eine vereinfachte Draufsicht auf einen Sensor in Funktionsblöcken mit mehreren zueinander winkelversetzten Erfassungseinheiten.

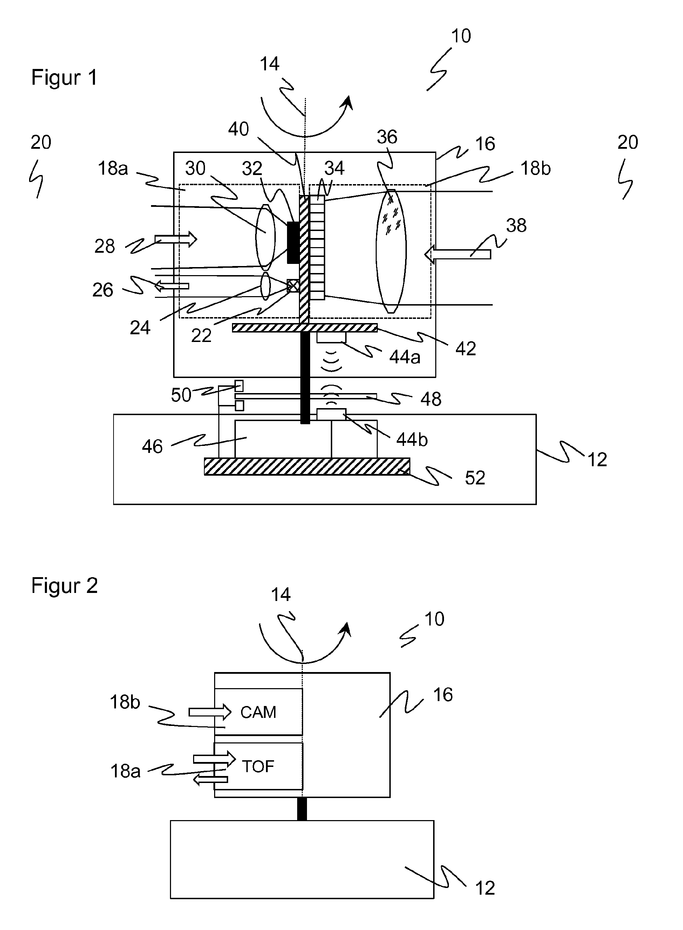

Fig. 1 zeigt eine schematische Schnittdarstellung durch einen Sensor 10, der einen ruhenden Sockel 12 und eine dagegen um eine Drehachse 14 bewegliche Abtasteinheit 16 aufweist. In der Abtasteinheit 16 sind zwei Erfassungseinheiten 18a, 18b zur Erfassung von Objektinformationen aus einem den Sensor 10 umgebenden Überwachungsbereich 20 untergebracht, wobei die Erfassungseinheiten 18a, 18b die Drehbewegung der Abtasteinheit 16 mitvollziehen.

Die erste Erfassungseinheit 18a ist zur optischen Entfernungsmessung mit einem Lichtlaufzeitverfahren ausgebildet ("TOF", Time of Flight). Dazu ist ein Lichtsender 22 vorgesehen, beispielsweise mit einer Laserlichtquelle, der mit Hilfe einer Sendeoptik 24 einen Sendelichtstrahl 26 erzeugt und in den Überwachungsbereich 20 aussendet. Trifft der Sendelichtstrahl 26 in dem Überwachungsbereich 20 auf ein Objekt, so kehrt ein entsprechender Lichtstrahl als remittiertes Licht 28 zu dem Sensor 10 zurück und wird von einer Empfangsoptik 30 auf einen Lichtempfänger 32 gebündelt und dort in ein elektrisches Empfangssignal gewandelt.

Die zweite Erfassungseinheit 18b ist zur Bildaufnahme ausgebildet und weist dazu einen pixelaufgelösten Bildsensor 34 auf, der über eine Empfangsoptik 36 Bilddaten aus Licht 38 aus dem Überwachungsbereich erzeugt. In vielen Fällen wird ein üblicher Bildsensor 34 zur Erfassung von Grau- oder Farbwerten im sichtbaren Spektrum eingesetzt. Denkbar ist aber auch eine Wärmebildkamera mit einem FLIR-Sensor.

Lichtsender 22 und Lichtempfänger 32 der ersten Erfassungseinheit 18a sowie Bildsensor 34 der zweiten Erfassungseinheit 18b sind auf Vorder- und Rückseite einer gemeinsamen Elektronikkarte 40 vorgesehen, die zentral und senkrecht zu den optischen Achsen der Erfassungseinheiten 18a, 18b angeordnet ist. Eine weitere Elektronikkarte 42 ist mit der gemeinsamen Elektronikkarte 40 verbunden und senkrecht zu der Drehachse 14 angeordnet. Diese weitere Elektronikkarte 42 weist eine mitbewegte Schnittstelle 44a für drahtlose Datenübertragung beziehungsweise Energieversorgung auf oder ist damit verbunden.

Die Abtasteinheit 16 mit ihren Elementen wird von einem Motor 46 in dem Sockel 12 in Bewegung versetzt, insbesondere eine kontinuierliche Drehbewegung um die Drehachse 14. Dadurch tasten beide Erfassungseinheiten den umlaufenden Überwachungsbereich 20 ab. Dabei werden zum rasch wiederholten Abscannen des Überwachungsbereichs 20 und damit letztlich der Bildwiederholfrequenz hohe Drehgeschwindigkeiten von tausend Umdrehungen pro Minute und mehr verwendet. Eine Winkelmesseinheit, die in dem gezeigten Ausführungsbeispiel eine mitdrehende Codescheibe 48 und eine abtastende Lichtschranke 50 aufweist, bestimmt die jeweilige Winkelstellung der Abtasteinheit 16.

In dem Sockel 12 ist weiterhin eine Schnittstelle 44b vorgesehen, die in drahtloser Verbindung mit der Schnittstelle 44a der Abtasteinheit 16 steht und den Datenaustausch beziehungsweise die Energieversorgung sicherstellt. Die Schnittstelle 44a, 44b hat einen Versatz zur zentralen Drehachse, was aber in erster Linie darstellungsbedingt und in der Praxis nicht unbedingt vorteilhaft ist, weil sich so die Verbindungslinie mit der Drehbewegung verändert. Außerdem weist der Sockel 12 nochmals mindestens eine Elektronikkarte 52 auf. Die Elektronikkarten 40, 42 und 52 sind untereinander direkt oder über die Schnittstellen 44a, 44b verbunden und stehen symbolisch für die in beliebiger Weise auf ruhenden Sockel 12 und mitbewegte Abtasteinheit 16 verteilbare Steuer- und Auswertungsfunktionalität. Auch die Anordnung der Elektronikkarten 40, 42, 52 ist rein beispielhaft zu verstehen, und es kann ebenso auf einige dieser Elektronikkarten 40, 42, 52 verzichtet werden, wie dass zusätzliche Elektronikkarten eingesetzt werden. Jedoch kann es vorteilhaft sein, zumindest die eng mit dem jeweiligen Sensorprinzip der Erfassungseinheiten 18a, 18b verbundenen Auswertungen möglichst sensornah, also in der Abtasteinheit 16, zu implementieren sowie den Datenverkehr über die Schnittstelle 44a, 44b zur Bandbreitenbegrenzung möglichst gering zu halten.

Mit Hilfe des Empfangssignals der ersten Erfassungseinheit 18a, d.h. von dessen Lichtempfänger 32, wird mit einem beispielsweise puls- oder phasenbasierten Lichtlaufzeitverfahren die Distanz zu einem angetasteten Objekt gemessen. Da die jeweilige Winkelstellung über die Winkelmesseinheit 48, 50 bekannt ist, stehen mit Distanz und Winkel nach einer Drehung der Abtasteinheit 16 Polarkoordinaten aller Objektpunkte in dem umgebenden Überwachungsbereich 20 zur Verfügung. Handelt es sich bei dem Lichtempfänger 32 um eine einfache Empfangsfläche, etwa eine Photodiode, so wird effektiv eine Ebene über bis zu 360° abgetastet. Durch Einsatz mehrerer übereinander angeordneter Lichtempfänger kann diese Ebene auf einen Zylinder endlicher Höhe erweitert werden. Durch mehrere nebeneinander angeordnete Lichtempfänger wird die Winkelauflösung verbessert. Beides gleichzeitig wird durch eine matrixartige Anordnung der Lichtempfänger realisiert. Dabei sind solche zeilen- oder matrixartigen 3D-Bildsensoren (TOF-Bildsensor) als separate Bauteile oder eine integrierte Empfängerzeile beziehungsweise Empfängermatrix etwa in Form eines CCD- oder CMOS-Chips denkbar. Durch eine zusätzliche Verkippung der Abtasteinheit 16 kann der Überwachungsbereich 20 auf ein größeres 3D-Volumen erweitert werden.

Die zweite Erfassungseinheit 18b nimmt Bilddaten des Überwachungsbereichs 20 in verschiedenen Drehstellungen der Abtasteinheit 16 auf. Diese Bilddaten können zu einem Panoramabild fusioniert werden. Für eine korrekte Bildfusion stehen sowohl die Winkelinformationen der Winkelmesseinheit 48, 50 als auch die erfassten Bildmerkmale an den Nahtstellen zur Verfügung ("Stitching").

Ein großer Vorteil davon, dass die beiden Erfassungseinheiten 18a, 18b Teil desselben Sensors 10 sind, besteht darin, dass die relative Position und Orientierung der beiden Erfassungseinheiten zueinander, auch als 6D-Lage bezeichnet, schon im Fertigungsprozess festgelegt und justiert oder zumindest sehr genau bestimmt werden kann. Dies wird auch als Registrierung der Erfassungseinheiten 18a, 18b bezeichnet. Dadurch können die jeweils erfassten Informationen präzise und einfach in ein gemeinsames Koordinatensystem umgerechnet und so fusioniert werden. Beispielsweise können die Geometrie- oder Abstandsdaten der ersten Erfassungseinheit 18a genutzt werden, um Abstände zu Objekten in den Bilddaten der zweiten Erfassungseinheit 18b punktuell zu ermitteln, oder um ein vollständiges Überlagerungsbild aus Geometriedaten und Bilddaten zu erzeugen. Um eine vergleichbare Fusion verschiedener herkömmlicher Sensoren zu erreichen, müsste die 6D-Lage bei Installation oder im Betrieb festgestellt und fixiert werden.

Die Erfassungseinheiten 18a, 18b haben in der Ausführungsform gemäß Figur 1 einen gegenseitigen Winkelversatz von 180°. Das bedeutet, dass zu einem Zeitpunkt Informationen aus verschiedenen Winkelsektoren des Überwachungsbereichs 20 erfasst werden. Über die Winkelmesseinheit 48, 50 sind jedoch die jeweiligen Dreh- oder Winkelstellungen der Erfassungseinheiten 18a, 18b bekannt, so dass die Informationen einander im Anschluss korrekt zugeordnet werden können. Umgekehrt können auch die Erfassungen jeweils bei definierten Encoderpositionen ausgelöst werden. Der Winkelversatz von 180° ist vorteilhaft, weil der Bauraum optimal ausgenutzt wird, aber nicht darauf festgelegt.

Neben der bereits angesprochenen Fusion können die von der einen Erfassungseinheit 18a gewonnenen Informationen auch genutzt werden, um Parameter der anderen Erfassungseinheit 18b einzustellen. Beispielsweise wird dafür von der ersten Erfassungseinheit 18a der Abstand zu einem Objekt gemessen. Bis dann unter Berücksichtigung des gegenseitigen Winkelversatzes der Erfassungseinheiten 18a, 18b im Laufe der Bewegung der Abtasteinheit 16 um die Drehachse 14 die zweite Erfassungseinheit 18b ein Bild dieses Objekts aufnimmt, kann bereits eine Fokusverstellung der Empfangsoptik 36 erfolgt sein, um das Objekt scharf zu erfassen. In ganz ähnlicher Weise ist eine Zoom-Einstellung der Empfangsoptik 36 möglich, wobei anstelle eines physischen Zoom-Objektivs auch ein digitales Zoom denkbar ist, also eine Bildbearbeitung zur Veränderung der Pixelauflösung. Dadurch kann erreicht werden, dass über den gesamten Überwachungsbereich 20 scharfe Bilder der Objekte insbesondere auch bei gleicher Bildauflösung aufgenommen werden.

Die Kombination oder Fusion aus Geometriedaten der ersten Erfassungseinheit 18a und Bilddaten der zweiten Erfassungseinheit 18b ermöglicht zahlreiche Anwendungen. Als einige Beispiele seien die Inspektion und Vermessung von Objekten, die Erfassung von Straßenzügen, allgemein die Visualisierung dreidimensionaler Objekte, die autonome Navigation genannt. Eine spezielle Anwendung ist das Lesen von Codes. Dazu kann die erste Erfassungseinheit 18a als Barcodescanner ausgebildet sein, wobei mit dem den Barcode lesenden Strahl wahlweise zugleich eine optische Entfernungsmessung nach einem Phasenverfahren erfolgt oder nicht. Die zweite Erfassungseinheit 18b kann als kamerabasierter Codeleser ausgebildet sein, also die erfassten Bilddaten oder auch mit den Geometriedaten der ersten Erfassungseinheit 18a fusionierten Daten auswerten, um darin enthaltene Codeinformationen auszulesen.

Figur 1 zeigt nur eine der zahlreichen Varianten eines erfindungsgemäßen Sensors 10. Durch Veränderung von Anzahl, Position und Sensorprinzip der beteiligten Erfassungseinheiten 18a, 18b entsteht eine große Vielzahl an weiteren Ausführungsformen, von denen nun einige keineswegs abschließend vorgestellt werden sollen. Merkmale, die dabei nur zu einer Figur beschrieben werden, können auf andere Figuren übertragen werden, beispielsweise die Ausgestaltung bestimmter Erfassungseinheiten 18a, 18b und auch weitere Kombinationen von unterschiedlichen Erfassungseinheiten 18a, 18b. Außerdem ist denkbar, dass die Abtasteinheit nicht nur wie dargestellt um eine Achse drehbar ist, sondern um zwei Achsen, die insbesondere orthogonal zueinander stehen. Dadurch wird eine 3D-Abtastung ermöglicht.

Die weiteren Figuren sind gegenüber der Figur 1 stark vereinfacht und zeigen die Elemente des Sensors 10 nur noch als übergeordnete Funktionsblöcke. So wird eine Erfassungseinheit vom Typ der ersten Erfassungseinheit 18a in Figur 1 nur noch als "TOF" bezeichnet, was stellvertretend für alle Ausgestaltungen einer Erfassungseinheit zur optischen Entfernungsmessung steht. Entsprechendes gilt für eine als "CAM" bezeichnete Erfassungseinheit vom Typ der zweiten Erfassungseinheit 18b in Figur 1. Die detaillierten Merkmale sind daraus in Analogie zu Figur 1 entnehmbar.

Mit diesen Vorbemerkungen zeigt Figur 2 eine Ausführungsform des Sensors 10, die wie in Figur 1 eine "TOF"-Erfassungseinheit 18a und eine "CAM"-Erfassungseinheit 18b aufweist. Während in Figur 1 die beiden Erfassungseinheiten 18a, 18b einen gegenseitigen Winkelversatz von 180° aufweisen, sind sie bei dieser Ausführungsform übereinander angeordnet. Das bietet die Möglichkeit, zeitgleich Informationen aus demselben Winkelbereich zu erfassen. Obwohl die beiden Erfassungseinheiten 18a, 18b vorzugsweise zueinander registriert sind und man dadurch auch bei einem Winkelversatz die Informationen in ein gemeinsames Koordinatensystem umrechnen könnte, kann es in manchen Situationen vorteilhaft sein, den Zeitversatz zu vermeiden. Das gilt beispielsweise bei Objekten, die sich im Vergleich mit der Drehgeschwindigkeit der Abtasteinheit 16 schnell bewegen oder jedenfalls nicht mehr innerhalb einer Abtastperiode quasistatisch verhalten. Unter Umständen muss darauf geachtet werden, dass die Erfassungseinheiten 18a, 18b einander nicht stören. Das ist bei ausreichendem Winkelversatz wie in Figur 1 automatisch gegeben. Bei gleichem oder sich überschneidendem Erfassungswinkel wie in Figur 2 können unterschiedliche Spektren insbesondere in Verbindung mit optischen Filtern verwendet werden. Weiterhin sind signaltechnische Maßnahmen zur Vermeidung einer gegenseitigen Beeinflussung denkbar, etwa zeitliches Ausweichen oder Codierungen. Die Möglichkeit, mehrere oder alle Erfassungseinheiten 18a, 18b übereinander anzuordnen, besteht auch in den folgenden Ausführungsformen, ohne dass dies nochmals erwähnt wird.

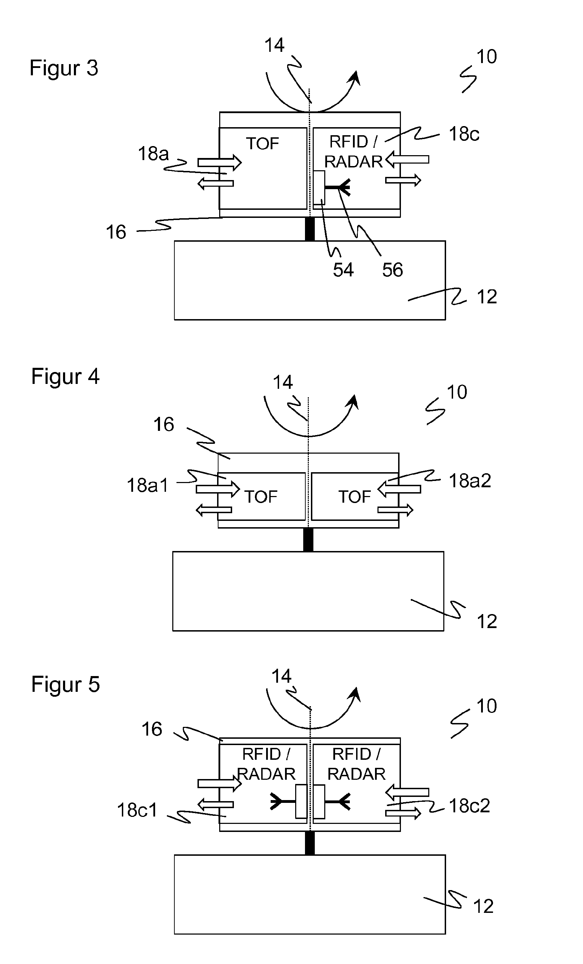

Figur 3 zeigt eine weitere Ausführungsform des Sensors 10. Im Unterschied zu Figur 1 wird hier eine "TOF"-Erfassungseinheit 18a mit einem nicht optischen Sensorprinzip kombiniert, nämlich einer "RFID/RADAR"-Erfassungseinheit 18c. RFID/Radar sind genaugenommen in sich zwei alternative Sensorprinzipien, die hier zusammengefasst sind, weil beides auf Funk basiert. Allerdings werden mittels RFID zuvor abgelegte und mittels Tansponder mit einem Objekt verbundene Daten ausgelesen, während Radar das Objekt aufgrund von physikalischen Eigenschaften des ausgesandten und wieder empfangenen Radar-Signals erkennt. Beide Technologien zeigen also deutliche Unterschiede, und so ist eine weitere Kombination denkbar, nämlich ein RFID-Modul mit einem Radar-Modul. Andererseits ist auch vorstellbar, das Trägersignal der RFID-Lesung zugleich als Radar-Signal zu nutzen, also sowohl das Signal hinsichtlich seiner intrinsischen physikalischen Eigenschaften wie Laufzeit, Intensität (RSSI, Received Signal Strength Indicator) oder Phase auszuwerten, als auch eine auf den Träger aufmodulierte RFID-Zusatzinformation auszulesen.

Aufbau und Funktion einer RFID-Erfassungseinheit 18c ebenso wie einer Radar-Erfassungseinheit 18c sind dem Fachmann im Prinzip bekannt. In Figur 3 sind daher nur symbolisch als wichtige Bestandteile ein RFID- oder Radar-Empfänger 54, insbesondere RFID- oder Radar-Transceiver, und eine Antenne 56 dargestellt. Die Antenne 56 hat vorzugsweise eine enge Richtcharakteristik, damit tatsächlich nur Informationen aus dem Winkelbereich erfasst werden, in den die Erfassungseinheit 18c in der jeweiligen Drehstellung ausgerichtet ist. In den Elektronikkarten 40, 42, 52 ist eine für die Erfassung beziehungsweise Modifikation von RFID-Informationen oder die Auswertung eines Radar-Signals erforderliche Auswertungs- und Steuerungsfunktionalität vorzusehen.

Die Kombination von optischer Abstandsmessung TOF mit RFID ermöglicht, zugleich die Informationen aus einem Transponder auszulesen und das den Transponder tragende Objekt zu lokalisieren und zu identifizieren. Dadurch wird das häufig auftretende Problem gelöst, die RFID-Informationen dem richtigen Objekt zuzuordnen. Umgekehrt wäre mit optischen Mitteln allein die Information, die ein Transponder vermittelt, nicht zugänglich. Durch die Fusion der beiden Sensorprinzipien wird daher erheblich mehr Wissen über die Objekte in dem Überwachungsbereich 20 erfasst als sogar durch die Summe der einzelnen Sensorprinzipien. Die Kombination TOF mit RADAR führt zu einer diversitär-redundanten Bestimmung von Objektkonturen beziehungsweise Objektpositionen, die besonders robust und dadurch beispielsweise auch unter widrigen Bedingungen wie im Outdoorbereich nutzbar ist. Alternativ zu der dargestellten Kombination einer "TOF"-Erfassungseinheit 18a mit einer "RFID/RADAR"-Erfassungseinheit 18c ist auch eine Kombination einer "CAM"-Erfassungseinheit 18b mit einer "RFID/RADAR"-Erfassungseinheit 18c denkbar, die ähnliche Vorteile aufweist.

Während bisher Kombinationen von unterschiedlichen Erfassungseinheiten 18a-c vorgestellt wurden, besteht auch die Möglichkeit, zwei gleichartige Erfassungseinheiten 18a-c einzusetzen. Figur 4 zeigt ein Beispiel mit zwei um 180° zueinander versetzten "TOF"-Erfassungseinheiten 18a1, 18a2. Dadurch entsteht ein redundanter oder zweikanaliger Laserscanner mit vollständiger Kanaltrennung. Ein derartiges System kann fehlersicher aufgebaut werden und erfüllt so die strengen Anforderungen der Normen für sicherheitstechnische Anwendungen. Es ist extrem unwahrscheinlich, dass eine Störung beide Erfassungseinheiten 18a1, 18a2 mit ihren versetzten Sichtbereichen gleichzeitig betrifft, vor allem wenn auch die zugehörigen Datenübertragungs- und Auswertungspfade redundant ausgelegt werden. Es ist dabei nicht erforderlich und nicht einmal unbedingt zweckmäßig, beide Kanäle gänzlich baugleich aufzubauen. Die Verwendung unterschiedlicher Hardware oder unterschiedlicher Algorithmen macht es noch unwahrscheinlicher, dass ein Fehler zu einem Ausfall beider Kanäle führt (diversitäre Redundanz).

Figur 5 zeigt ein weiteres Beispiel mit gleichartigen Erfassungseinheiten 18a-c, wobei hier zwei "RFID/RADAR"-Erfassungseinheiten 18c1, 18c2 vorgesehen sind. Zwei "RADAR"-Erfassungseinheiten 18c1, 18c2 funktionieren im Prinzip mit gleichen Vorteilen wie die oben zu Figur 4 beschriebene Ausführungsform mit zwei "TOF"-Einheiten, wobei hier natürlich Funk statt Licht verwendet wird. Im Falle von RFID steht weniger die an sich denkbare Redundanz im Vordergrund, denn die Erfassung von RFID-Informationen ist in der Regel durch das Protokoll stabilisiert und auch nicht sicherheitskritisch. Dafür besteht die Möglichkeit, mit der einen "RFID"-Erfassungseinheit 18c1, 18c2 eine Hintergrundmessung durchzuführen, wobei dieser Hintergrund dann in den erfassten RFID-Informationen der anderen "RFID"-Erfassungseinheit 18c2, 18c1 ausgeblendet wird. Die Hintergrundmessung könnte auch eine Radar-Messung zur Abstandsbestimmung beinhalten. Die beiden synchronisierten, drehenden "RFID"-Erfassungseinheiten 18c1, 18c2 erlauben dadurch eine vereinfachte und genauere Lokalisierung der Transponder und damit verbesserte Zuordnung der gelesenen RFID-Informationen zu einem Objekt.

Auch eine nicht gezeigte Ausführungsform mit zwei "CAM"-Erfassungseinheiten 18b ist vorstellbar, beispielsweise um ein redundantes System zu erhalten oder die Bildauflösung zu verbessern.

Die Erfassungsrichtung der Erfassungseinheiten 18a-c in den bisherigen Ausführungsformen ist im Wesentlichen senkrecht zu der Drehachse 14. Figur 16 zeigt eine weitere Ausführungsform, in welcher die Erfassungsrichtung ungefähr in Richtung der Drehachse 14 liegt. Bei den dargestellten Erfassungseinheiten handelt es sich um "TOF"-Erfassungseinheiten 18a1-18a5, vorzugsweise um einstrahlige Systeme. Obwohl denkbar, würden andere Sensorprinzipien in dieser Ausrichtung bezüglich der Drehachse 14 in ihren Erfassungsbereichen untereinander und in verschiedenen Drehstellungen sehr stark übereinstimmen.

Jede "TOF"-Erfassungseinheit 18a1-18a5 erfasst einen Kegelmantel, dessen Mittenachse die Drehachse 14 bildet. Durch gegenseitiges Verkippen, wird effektiv nicht nur ein Kegelmantel, sondern über die verschiedenen ineinander konzentrisch angeordneten Kegelmäntel ein Vollkegel erfasst. Dargestellt ist ein Kippwinkel von 10°. Dadurch sind jeweils Paare von "TOF"-Erfassungseinheiten 18a1, 18a5 und 18a2, 18a4 mit 180° Winkelversatz auf den gleichen Kegelmantel ausgerichtet. Diese Redundanz kann gewünscht sein oder durch unterschiedliche Kippwinkel zugunsten einer verbesserten Auflösung variiert werden, also beispielsweise 5° und 15° für die beiden links dargestellten "TOF"-Erfassungseinheiten 18a1, 18a2 und 10° und 20° für die beiden nach rechts dargestellten "TOF"-Erfassungseinheiten 18a4, 18a5. Die Zahlenwerte sind rein beispielhaft zu verstehen. Auch parallel ausgerichtete "TOF"-Erfassungseinheiten 18a1-18a5 sind möglich, dann werden mehrere konzentrische Zylindermantelflächen überwacht. Die "TOF"-Erfassungseinheiten 18a1-18a5 können jeweils einen Lichtsender 22, eine Sendeoptik 24 und eine Empfangsoptik 30 aufweisen oder einige oder alle dieser Elemente in Gruppen oder insgesamt gemeinsam verwenden.

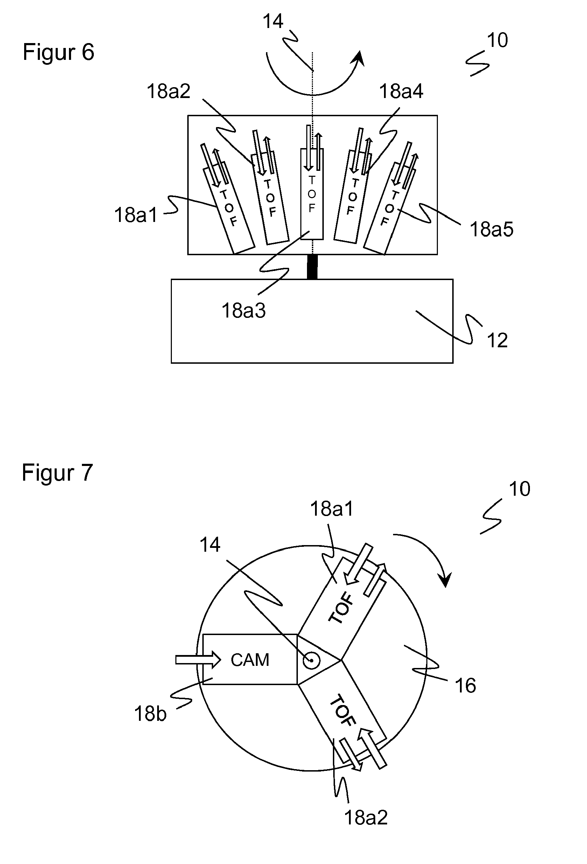

Figur 7 zeigt in einer Draufsicht eine weitere Ausführungsform mit drei statt wie bisher nur zwei Erfassungseinheiten 18a1, 18a2, 18b. Die dargestellten Anzahlen, der gegenseitige Winkelversatz und der Typ der Erfassungseinheiten 18a1, 18a2, 18b ist rein beispielhaft und kann analog zu allen oben beschriebenen Ausführungsformen verändert werden. Um neben dem dargestellten System mit einer Kamera und einem redundanten Laserscanner ("CAM"+2*"TOF") nur zwei der zahlreichen weiteren Beispiele zu nennen, können Geometriedaten mit Bilddaten im sichtbaren und infraroten Spektrum ("TOF" + "CAM" + "CAM (IR)") oder eine optoelektronische Abstandsmessung mit einer RFID-Hintergrundausblendung und einer RFID-Lesung ("TOF" + 2*"RFID") kombiniert werden. Aus diesen Beispielen sind weitere Ausführungsformen mit drei oder mehr Modulen aller genannten Arten TOF, CAM, RFID und RADAR entsprechend ableitbar.

## Patentansprüche

1. Sensor (10) zur Erfassung von Objektinformationen aus einem Überwachungsbereich (20), der eine Erfassungseinheit (18a-c) mit einem Empfänger (32, 34) zum Erzeugen eines elektrischen Empfangssignals aus elektromagnetischen Signalen von Objekten in dem Überwachungsbereich (20), eine um eine Drehachse (14) bewegliche Abtasteinheit (16), in der die Erfassungseinheit (18) zur periodischen Abtastung des Überwachungsbereichs (20) untergebracht ist sowie eine Auswertungseinheit (40, 42, 42) zur Erzeugung von Objektinformationen aus dem Empfangssignal aufweist,
**dadurch gekennzeichnet,**
**dass** in der Abtasteinheit (16) mindestens zwei Erfassungseinheiten (18a-c) mit jeweiligem Empfänger (32, 34, 54) vorgesehen sind, um zusätzliche Objektinformationen zu gewinnen.

2. Sensor (10) nach Anspruch 1,
wobei die Erfassungseinheiten (18a-c) bezüglich der Bewegung um die Drehachse (14) einen gegenseitigen Winkelversatz aufweisen.

3. Sensor (10) nach Anspruch 1 oder 2,
wobei die Erfassungseinheiten (18a-c) zueinander registriert sind und die Auswertungseinheit (40, 42, 52) dafür ausgebildet ist, die Objektinformationen der Erfassungseinheiten (18a-c) zu fusionieren.

4. Sensor (10) nach einem der vorhergehenden Ansprüche,
wobei mindestens eine Erfassungseinheit (18a) einen Bildsensor (34) oder einen Wärmebildsensor (34) aufweist.

5. Sensor (10) nach Anspruch 4,
wobei die Auswertungseinheit (40, 42, 54) dafür ausgebildet ist, mit dem Bildsensor (34) in verschiedenen Drehstellungen der Abtasteinheit (16) aufgenommene Bilddaten zu einem Panoramabild zusammenzusetzen.

6. Sensor (10) nach einem der vorhergehenden Ansprüche,
wobei mindestens eine Erfassungseinheit (18a) zur optischen Entfernungsmessung einen Lichtsender (22) zum Aussenden eines Sendelichtstrahls (26) und einen Lichtempfänger (32) zum Empfangen des von Objekten in dem Überwachungsbereich (20) remittierten Sendelichtstrahls (28) aufweist, wobei die Auswertungseinheit (40, 42, 52) dafür ausgebildet ist, eine Lichtlaufzeit des ausgesandten und wieder empfangenen Lichts zu bestimmen.

7. Sensor (10) nach Anspruch 6,
wobei die Erfassungseinheit (18a) zur optischen Entfernungsmessung eine Vielzahl von Lichtempfängern (32) aufweist.

8. Sensor (10) nach einem der vorhergehenden Ansprüche,
wobei mindestens eine Erfassungseinheit (18c) einen RFID-Empfänger (54) oder einen Radar-Empfänger (54) aufweist.

9. Sensor (10) nach einem der vorhergehenden Ansprüche,
wobei mindestens zwei Erfassungseinheiten (18a-c) untereinander gleichartig aufgebaut sind.

10. Sensor (10) nach einem der vorhergehenden Ansprüche,
wobei mehrere Erfassungseinheiten (18c1, 18c2) einen RFI D-Empfänger (54) oder einen Radar-Empfänger (54) aufweisen.

11. Sensor (10) nach einem der vorhergehenden Ansprüche,
wobei mindestens eine Erfassungseinheit (18b) einen Bildsensor (34) aufweist und mindestens eine Erfassungseinheit (18a) zur optischen Entfernungsmessung ausgebildet ist.

12. Sensor (10) nach Anspruch 11,
wobei eine Fokuseinstellung für eine Empfangsoptik (36) des Bildsensors (34) anhand der optischen Entfernungsmessung eingestellt wird und/oder wobei die Bildauflösung der mit dem Bildsensor (34) aufgenommenen Bilddaten anhand der optischen Entfernungsmessung digital angepasst wird.

13. Sensor (10) nach einem der vorhergehenden Ansprüche,
wobei mindestens eine Erfassungseinheit (18c) einen RFID-Empfänger (54) oder einen Radar-Empfänger (54) aufweist und mindestens eine Erfassungseinheit (18b, 18a) einen Bildsensor (34) aufweist oder zur optischen Entfernungsmessung ausgebildet ist.

14. Sensor (10) nach einem der vorhergehenden Ansprüche,
der einen Winkelencoder (48, 50) aufweist, um eine Drehstellung der Abtasteinheit (16) zu bestimmen, wobei eine Erfassung von elektromagnetischen Signalen in für die jeweilige Erfassungseinheit (18a-c) vorgegebenen oder anhand des Winkelencoders (48, 50) überprüften Drehstellungen erfolgt.

15. Verfahren zur Erfassung von Objektinformationen aus einem Überwachungsbereich (20), bei dem eine Abtasteinheit (16) um eine Drehachse (14) bewegt wird, eine in der Abtasteinheit (16) untergebrachte Erfassungseinheit (18a-c) ein elektrisches Empfangssignal aus elektromagnetischen Signalen von Objekten in dem Überwachungsbereich (20) erzeugt, wobei aus dem Empfangssignal Objektinformationen gewonnen werden,
**dadurch gekennzeichnet,**
**dass** in der Abtasteinheit (16) mindestens eine zweite Erfassungseinheit (18a-c) ein zweites elektrisches Empfangssignal aus elektromagnetischen Signalen von Objekten in dem Überwachungsbereich (20) erzeugt und aus dem zweiten Empfangssignal zusätzliche Objektinformationen gewonnen werden.
